# EUROPÄISCHE PATENTSCHRIFT

(11) **EP 2 569 341 B1**
(45) Veröffentlichungstag und Bekanntmachung des Hinweises auf die Patenterteilung: **01.01.2014**
(21) Anmeldenummer: 11720738.1
(22) Anmeldetag: 09.05.2011
(51) Int. Cl.: C08F 251/00, C08F 253/00, C08L 51/02, C08L 51/04

(54) **LOW-PROFILE-ADDITIVE AUF BASIS NACHWACHSENDER ROHSTOFFE**
LOW-PROFILE ADDITIVES ON THE BASIS OF RENEWABLE RESOURCES
ADDITIF ANTI-RETRAIT (LPA) À BASE DE MATIÈRES PREMIÈRES RENOUVELABLES

(30) Priorität: 12.05.2010 DE 102010028952
(43) Veröffentlichungstag der Anmeldung: 20.03.2013
(73) Patentinhaber: Wacker Chemie AG, 81737 München (DE)
(72) Erfinder: BAUERS, Florian, 84489 Burghausen (DE); ZARKA, Michael Tobias, 84489 Burghausen (DE)
(74) Vertreter: Ege, Markus
(86) Internationale Anmeldenummer: PCT/EP2011/057371
(87) Internationale Veröffentlichungsnummer: WO 2011/141398

(56) Entgegenhaltungen:
- DE-A1- 2 742 595
- GB-A- 1 116 256
- GB-A- 2 448 099

## Beschreibung

Die Erfindung betrifft die Verwendung von Polymerisaten auf Basis nachwachsender Rohstoffe als Low-Profile-Additive (LPA), radikalisch vernetzbare Polymerisat-Zusammensetzungen enthaltend Polymerisate auf Basis nachwachsender Rohstoffe sowie die durch Härtung der genannten Polymerisat-Zusammensetzungen erhältlichen Composite-Bauteile.

Für die Herstellung von Composite-Bauteilen werden häufig radikalisch vernetzbare Polymerisat-Zusammensetzungen auf Basis von beispielsweise ungesättigten Polyesterharzen (UP-Harze) eingesetzt. Ungesättigte Polyesterharze sind erhältlich durch Polykondensation von Dicarbonsäuren oder Dicarbonsäureanhydriden, von denen zumindest einzelne ethylenisch ungesättigte Gruppen tragen, mit Polyolen. Die radikalisch vernetzbaren Polymerisat-Zusammensetzungen enthalten des Weiteren Monomere mit ethylenisch ungesättigten Gruppen, im allgemeinen Styrol. Styrol wird den radikalisch vernetzbaren Polymerisat-Zusammensetzungen beispielsweise zugegeben, um die vernetzbaren Polymerisate zu lösen und um sicherzustellen, dass die radikalisch vernetzbaren Polymerisat-Zusammensetzungen fließfähige Massen sind. Als weitere Bestandteile enthalten die radikalisch vernetzbaren Polymerisat-Zusammensetzungen oftmals noch Fasermaterialien wie Glasfasern, Carbonfasern oder entsprechende Fasermatten (Fiber Reinforced Plastic composites = FPR composites), die zu einer Verstärkung der durch Aushärtung der radikalisch vernetzbaren Polymerisat-Zusammensetzungen erhältlichen Composite-Bauteile führen.

Ein Problem bei der Verarbeitung solcher radikalisch vernetzbaren Polymerisat-Zusammensetzungen zu Composite-Bauteilen ist der Volumenschwund während der Härtung der Polymerisat-Zusammensetzungen. Zur Reduzierung des Schrumpfs bei der Aushärtung werden den radikalisch vernetzbaren Polymerisat-Zusammensetzungen daher sogenannte Low-Profile-Additive (LPA) zugegeben. Low-Profile-Additive reduzieren das Schrumpfen beim Aushärten, bauen Eigenspannungen ab, verringern Mikrorissbildung, und erleichtern das Einhalten von Fertigungstoleranzen. Bei den Low-Profile-Additiven handelt es sich üblicherweise um Thermoplaste wie Polystyrol, Polymethylmethacrylat und insbesondere Polyvinylacetat, welche häufig noch carboxylfunktionelle Comonomereinheiten enthalten. So werden beispielsweise in der US 3718714 oder der DE-A 102006019686 Copolymerisate auf Basis von Vinylacetat und ethylenisch ungesättigten Carbonsäuren als LPA für die Herstellung von Composite-Bauteilen auf Basis von ungesättigten Polyesterharzen empfohlen.

Herkömmliche LPA bestehen also aus petrochemischen Produkten. Zunehmend werden jedoch LPA auf Basis von nachwachsenden Rohstoffen gefordert. Allerdings sind zahlreiche der bisher bekannten Produkte auf Basis nachwachsender Rohstoffe teuer, nicht kompatibel mit ethylenisch ungesättigten Monomeren, wie Styrol, oder zeigen keine Wirkung als LPA.

Vor diesem Hintergrund bestand die Aufgabe, Polymerisate auf Basis von nachwachsenden Rohstoffen bereitzustellen, die als Low-Profile-Additive (LPA) wirken, jedoch nicht die vorgenannten Nachteile aufweisen. Des Weiteren sollten die LPA nach Möglichkeit zu Composite-Bauteilen mit anwendungstechnischen Eigenschaften, wie beispielsweise mechanischen Eigenschaften führen, wie sie auch mit herkömmlichen LPA erreicht werden.

Die Aufgabe wurde überraschenderweise durch Verwendung von Polymerisaten auf Basis nachwachsender Rohstoffe gelöst, die durch radikalisch initiierte Polymerisation von ethylenisch ungesättigten Monomeren in Gegenwart von nachwachsenden Rohstoffen ausgewählt aus der Gruppe umfassend Kohlenhydrate und Naturkautschuks erhalten wurden.

Polymerisate auf Basis von ethylenisch ungesättigten Monomeren und nachwachsenden Rohstoffen sind an sich bekannt, wie beispielsweise in DE-A 2742595, US 3640925, WO 90/09406, WO 94/00514, DE-A 19619680, US 5583193, US 2006/0003014 oder WO 93/11300 beschrieben. Nicht bekannt ist hingegen die Verwendung derartiger Polymerisate als LPA.

Gegenstand der Erfindung ist die Verwendung von Polymerisaten auf Basis von nachwachsenden Rohstoffen als LPA, dadurch gekennzeichnet, dass die Polymerisate auf Basis von nachwachsenden Rohstoffen erhältlich sind durch radikalisch initiierte Polymerisation von einem oder mehreren ethylenisch ungesättigten Monomeren in Gegenwart von einem oder mehreren nachwachsenden Rohstoffen ausgewählt aus der Gruppe umfassend Kohlenhydrate und Naturkautschuks.

Als ethylenisch ungesättigte Monomere sind beispielsweise ein oder mehrere Monomere aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren geeignet.

Geeignete Vinylester sind beispielsweise solche von Carbonsäuren mit 1 bis 15C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind beispielsweise Ester von unverzweigten oder verzweigten Alkoholen mit 1 bis 20 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0,1 bis 20 Gew.-%, bezogen auf das Gesamtgewicht des Monomergemisches, Hilfsmonomere copolymerisiert werden. Bevorzugt werden 0,5 bis 10 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Crotonsäure, Fumarsäure und Maleinsäure; ethylenisch ungesättigte Anhydride, vorzugsweise Maleinsäureanhydrid; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester; ethylenisch ungesättigte Sulfonsäuren bzw. deren Salze, vorzugsweise Vinylsulfonsäure, 2-Acrylamido-2-methyl-propan-sulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugte Hilfsmonomere sind ethylenisch ungesättigte Mono- oder Dicarbonsäuren oder deren Anhydride. Ethylenisch ungesättigte Mono- oder Dicarbonsäuren oder deren Anhydride werden vorzugsweise zu 0,1 bis 5 Gew.-%, besonders bevorzugt zu 0,2 bis 4 Gew.-%, bezogen auf das Gesamtgewicht der ethylenisch ungesättigten Monomere, eingesetzt.

Bevorzugt werden Polymerisate auf Basis von nachwachsenden Rohstoffen, welche ein oder mehrere Monomer-Einheiten aus der Gruppe umfassend Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Besonders bevorzugt werden Polymerisate auf Basis von nachwachsenden Rohstoffen, welche Einheiten von Vinylacetat und Ethylen; Vinylacetat, einem Vinylester von α-verzweigten Monocarbonsäuren mit 9 bis 11 C-Atomen und gegebenenfalls Ethylen; Vinylacetat und einem oder mehreren Monomeren aus der Gruppe Methylacrylat, Methylmethacrylat, Ethylacrylat, Propylacrylat, n-Butylacrylat, 2-Ethylhexylacrylat und gegebenenfalls Ethylen; Methyl(meth)acrylat und einem oder mehreren Monomeren aus der Gruppe umfassend Ethylacrylat, Propylacrylat, n-Butylacrylat, 2-Ethylhexylacrylat, und gegebenenfalls Ethylen; Styrol und einem oder mehreren Monomeren aus der Gruppe Methylacrylat, Ethylacrylat, Propylacrylat, n-Butylacrylat, 2-Ethylhexylacrylat; 1,3-Butadien und Styrol und/oder Methylmethacrylat sowie gegebenenfalls weiteren Acrylsäureestern; enthalten, wobei die genannten Gemische gegebenenfalls noch ein oder mehrere der obengenannten Hilfsmonomere, insbesondere ethylenisch ungesättigte Mono- oder Dicarbonsäuren oder deren Anhydride, vorzugsweise in den oben genannten Mengen enthalten können.

Die Monomerauswahl bzw. die Auswahl der Gewichtsanteile der Comonomere erfolgt dabei so, dass im allgemeinen eine Glasübergangstemperatur Tg von ≤ 120°C, vorzugsweise -40°C bis +80°C, besonders bevorzugt -20°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die nachwachsenden Rohstoffe werden vorzugsweise ausgewählt aus der Gruppe umfassend Kohlenhydrate und Naturkautschuks. Bevorzugte nachwachsende Rohstoffe sind Kohlenhydrate.

Geeignete Kohlenhydrate sind beispielsweise Zucker, Stärken, Cellulosen und Chitine. Bevorzugte Kohlenhydrate sind Stärken. Die Stärke kann aus beliebigen Quellen stammen, beispielsweise aus Knollen oder Wurzeln, wie Kartoffeln, Maranta (Arrowroot), Maniok (Tapioka) oder Süßkartoffel (Batate), Getreidesamen, wie Weizen, Mais, Roggen, Reis, Gerste, Hirse, Hafer, Triticale oder Sorghum, Früchten, wie Bananen, Kastanien, Eicheln, Erbsen, Bohnen oder anderen Leguminosen, oder Mark, wie Sago. Vorzugsweise stammt die Stärke aus Knollen oder Wurzeln, wie insbesondere Kartoffeln oder Maniok (Tapioka), oder Getreide, wie insbesondere Weizen oder Mais. Die Stärke kann auch aus Abfällen, beispielsweise Kartoffelresten oder Kartoffelschalen, gewonnen werden oder deren Gemisch sein. Die Stärke kann in nativer Form, als destrukturierte Stärke, oder als chemisch modifizierte Stärke, beispielsweise als hydroxyalkylierte Stärke, oxidierte Stärke, Stärkeester, Stärkeether oder vernetzte Stärke, eingesetzt werden. Die chemisch modifizierten Stärken können dabei anionisch, kationisch oder nichtionisch sein. Bevorzugt ist der Einsatz von nativer Stärke.

Geeignete Naturkautschuks sind beispielsweise Kautschuks aus Kautschukbäumen, Balata, Chicle-Gummi, Guttapercha oder Guayule-Kautschuk. Bevorzugt sind Naturkautschuks aus Kauschukbäumen.

Zur Herstellung der Polymerisate auf Basis nachwachsender Rohstoffe werden die nachwachsenden Rohstoffe vorzugsweise zu 5 bis 90 Gew.-%, besonders bevorzugt zu 10 bis 60 Gew.-%, noch mehr bevorzugt zu 15 bis 55 Gew.-% und am meisten bevorzugt zu 20 bis 50 Gew.-% eingesetzt, jeweils bezogen auf das Gesamtgewicht der Polymerisate auf Basis nachwachsender Rohstoffe. Zur Herstellung der Polymerisate auf Basis nachwachsender Rohstoffe werden die ethylenisch ungesättigten Monomere vorzugsweise zu 10 bis 95 Gew.-%, besonders bevorzugt zu 40 bis 90 Gew.-%, noch mehr bevorzugt zu 45 bis 85 Gew.-% und am meisten bevorzugt zu 50 bis 80 Gew.-% eingesetzt, jeweils bezogen auf das Gesamtgewicht der Polymerisate auf Basis nachwachsender Rohstoffe.

Das gewichtsmittlere Molekulargewicht Mw der Polymerisate auf Basis nachwachsender Rohstoffe beträgt von 5.000 bis 10.000.000 g/mol, bevorzugt 10.000 bis 1.000.000 g/mol, besonders bevorzugt 20.000 bis 500.000 g/mol (Bestimmung mittels Gelpermeationschromatographie gegen Polystyrol-Standard). Im allgemeinen handelt es sich bei den Polymerisaten auf Basis nachwachsender Rohstoffe um Pfropfcopolymere von ethylenisch ungesättigten Monomeren auf die nachwachsenden Rohstoffe.

Die Herstellung der Polymerisate auf Basis nachwachsender Rohstoffe erfolgt beispielsweise mittels radikalischer Suspensions- oder vorzugsweise mittels Emulsions-, Lösungs- oder Substanzpolymerisationsverfahren der ethylenisch ungesättigten Monomere in Gegenwart der nachwachsenden Rohstoffe und von Radikalinitiatoren.

Als Lösungsmittel wird bevorzugt Wasser eingesetzt. Es kann aber auch ein organisches Lösungsmittel oder ein Gemisch von einem oder mehreren organischen Lösungsmitteln oder ein Gemisch von einem oder mehreren organischen Lösungsmitteln und Wasser eingesetzt werden. Beispiele für organische Lösungsmittel sind aliphatische Alkohole mit 1 bis 6-C-Atomen, wie Methanol, Ethanol, n-Propanol oder i-Propanol; aliphatische Ester, wie Ethylacetat und Butylacetat; aliphatische Ketone, wie Aceton und Methylethylketon; aliphatische Polyalkylendiole oder Diole oder deren Ether, wie Poly(propylenglykol), Poly(ethylenglykol),Propylenglykol oder Dimethyldipropylenglykol; aromatische Lösungsmittel, wie Toluol oder Xylol.

Die Reaktionstemperatur für die Herstellung der Polymerisate auf Basis nachwachsender Rohstoffe beträgt 20°C bis 160°C, vorzugsweise 40°C bis 140°C. Im allgemeinen wird bei Normaldruck unter Rückfluss polymerisiert. Bei der Copolymerisation von gasförmigen Monomeren wie Ethylen wird unter Druck, im allgemeinen zwischen 1 und 100 bar, gearbeitet.

Geeignete Radikalinitiatoren sind gängige öllösliche oder wasserlösliche Initiatoren. Beispiele für öllösliche Initiatoren sind öllösliche Peroxide, wie t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan, Di-(4-t-Butylcyclohexyl)peroxydicarbonat, Dilauroylperoxid, Cumylhydroperoxid, oder öllösliche Azoinitiatoren, wie Azobisisobutyronitril oder Dimethyl-2,2'-Azobis(2-methylpropionat). Beispiele für wasserlösliche Initiatoren sind Peroxodisulfate, wie Kaliumperoxodisulfat, Wasserstoffperoxid, wasserlösliche Hydroperoxide wie tert.-Butylhydroperoxid, Mangan(III)-Salze oder Cer(IV)-Salze. Die Initiatoren werden im Allgemeinen in einer Menge von 0,005 bis 3,0 Gew.-%, bevorzugt 0,01 bis 1,5 Gew.-%, jeweils bezogen auf Gesamtgewicht der ethylenisch ungesättigten Monomeren zur Herstellung der Polymerisate auf Basis nachwachsender Rohstoffe, eingesetzt. Bevorzugt ist der Einsatz von Redox-Initiatoren. Als Redox-Initiatoren verwendet man Kombinationen aus den genannten Initiatoren in Kombination mit Reduktionsmitteln. Geeignete Reduktionsmittel sind beispielsweise Natriumsulfit, Eisen(II)-Salze, Natriumhydroxymethansulfinat und Ascorbinsäure. Bevorzugte Redox-Initiatoren sind Cer(IV)-Salze, wie Ammoniumcer(IV)-nitrat, Mangan(III)-Salze oder Peroxodisulfate sowie Kombinationen dieser Initiatoren. Bei Einsatz von Reduktionsmitteln beträgt die Reduktionsmittelmenge vorzugsweise 0,01 bis 0,5 Gel.-%, bezogen auf das Gesamtgewicht der Monomere. Es können aber auch die eingesetzten nachwachsenden Rohstoffe selbst als Reduktionsntittel wirken.

Der Einsatz von Redoxinitiatoren führt in besonders vorteilhafter Weise zu einer Pfropfung von ethylenisch ungesättigten Monomeren auf die nachwachsenden Rohstoffe.

Die Stabilisierung des Reaktionsansatzes kann durch gängige Emulgatoren oder Schutzkolloide erfolgen. Vorzugsweise werden aber keine Emulgatoren oder Schutzkolloide eingesetzt. Besonders bevorzugt beträgt die Menge an Emulgatoren und Schutzkolloiden weniger als 7 Gew.-% und am meisten bevorzugt weniger als 1 Gew.-%, bezogen auf das Gesamtgewicht der ethylenisch ungesättigten Monomere. Beispiele für Schutzkolloide sind vollverseifte oder insbesondere teilverseifte Polyvinylalkohole; Polyvinylpyrrolidone; Polyvinylacetale; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und VinylethermaleinsäureCopolymere. Beispiele für Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Polymerisation kann unter Vorlage aller oder einzelner Bestandteile des Reaktionsgemisches oder unter teilweiser Vorlage und Nachdosierung aller oder einzelner Bestandteile des Reaktionsgemisches oder nach dem Dosierverfahren ohne Vorlage durchgeführt werden. Vorzugsweise wird so vorgegangen, dass zumindest ein Teil, vorzugsweise die gesamte Menge an den nachwachsenden Rohstoffen vorgelegt wird, gegebenenfalls in einem Lösungsmittel, insbesondere Wasser. Die ethylenisch ungesättigten Monomere und die Initiatoren werden vorzugsweise ganz oder teilweise vorgelegt und die gegebenenfalls verbleibende Menge an ethylenisch ungesättigten Monomeren und Initiatoren wird zudosiert. Bei Durchführung eines Batch-Verfahrens werden alle Monomere, nachwachsenden Rohstoffe, Lösungsmittel und ein Teil des Initiators vorgelegt, und der Initiatorrest wird zudosiert oder stoßweise zugegeben.

Bei Durchführung der Suspensions-, Emulsions- oder Lösungspolymerisationsverfahrens wird die Polymerisation im allgemeinen bis zu einem Festgehalt von 10 bis 90 %, bevorzugt bis zu einem Festgehalt von 30 bis 80 %, durchgeführt. Die Polymerisate auf Basis nachwachsender Rohstoffe liegen hierbei im allgemeinen in Form von Dispersionen vor.

Nach Abschluss der Polymerisation kann zur Restmonomerentfernung in Anwendung bekannter Methoden nachpolymerisiert werden. Flüchtige Restmonomere und weitere flüchtige Bestandteile können auch mittels Destillation oder Strippverfahren, vorzugsweise unter reduziertem Druck, entfernt werden.

Zur Isolierung der Polymerisate auf Basis nachwachsender Rohstoffe werden gegebenenfalls vorhandene Lösungsmittel oder Flüssigkeiten bei Temperaturen von 50 bis 100 °C und vorzugsweise unter vermindertem Druck abdestilliert. Polymerisate in Form von wässrigen Dispersionen können alternativ auch nach gängigen Trocknungsverfahren in entsprechende Pulver überführt werden, beispielsweise mittels Sprühtrocknung, Wirbelschichttrocknung oder Gefriertrocknung. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt. Schließlich können die Polymerisate auch mittels gängiger Filtrationsmethoden, insbesondere mittels Ultrafiltration isoliert werden.

Die so erhaltenen Polymerisate auf Basis nachwachsender Rohstoffe können direkt als LPA verwendet werden.

Ein weiterer Gegenstand der Erfindung sind radikalisch vernetzbare Polymerisat-Zusammensetzungen enthaltend ein oder mehrere radikalisch vernetzbare Polymerisate, ein oder mehrere ethylenisch ungesättigte Monomere (reaktive Monomere), gegebenenfalls Initiatoren, gegebenenfalls Füllstoffe sowie gegebenenfalls weitere Zusätze, dadurch gekennzeichnet, dass zusätzlich ein oder mehrere Polymerisate auf Basis nachwachsender Rohstoffe ausgewählt aus der Gruppe umfassend Kohlenhydrate und Naturkautschuks enthalten sind.

Als reaktive Monomere sind dieselben ethylenisch ungesättigten Monomere geeignet, bevorzugt bzw. besonders bevorzugt, die auch für die Polymerisation zur Herstellung der Polymerisate auf Basis nachwachsender Rohstoffe geeignet, bevorzugt bzw. besonders bevorzugt sind. Ganz besonders bevorzugte reaktive Monomere sind Styrol, Methylmethacrylat, Methylacrylat und Butylacrylat. Das am meisten bevorzugte reaktive Monomer ist Styrol.

Bevorzugte radikalisch vernetzbare Polymerisate sind ungesättigte Polyesterharze oder Vinylesterharze.

Die ungesättigten Polyesterharze sind Reaktionsprodukte von einer oder mehreren Dicarbonsäuren oder einer oder mehreren Dicarbonsäureanhydriden, von denen mindestens eine ein oder mehrere ethylenisch ungesättigte Gruppen trägt, mit einem oder mehreren Polyolen. Die Herstellung der ungesättigten Polyesterharze ist dem Fachmann bekannt.

Die Dicarbonsäuren oder die Dicarbonsäureanhydride haben vorzugsweise 2 bis 20, besonders bevorzugt 4 bis 20 und am meisten bevorzugt 4 bis 10 Kohlenstoffatome. Die ungesättigten Polyesterharze enthalten mindestens eine ethylenisch ungesättigte Dicarbonsäure oder mindestens ein ethylenisch ungesättigtes Dicarbonsäureanhydrid. Bevorzugte ethylenisch ungesättigte Dicarbonsäuren bzw. Dicarbonsäureanhydride sind Maleinsäure, Maleinsäureanhydrid, Fumarsäure, Methylmaleinsäure und Itaconsäure. Besonders bevorzugt sind Maleinsäure, Maleinsäureanhydrid und Fumarsäure.

Zusätzlich zu den ethylenisch ungesättigten Dicarbonsäuren oder Dicarbonsäureanhydriden können gesättigte Dicarbonsäuren oder Anhydride eingesetzt werden. Geeignete gesättigte Säuren oder Dicarbonsäureanhydride sind beispielsweise Orthophthalsäure, Isophthalsäure, Phthalsäureanhydrid, Terephthalsäure, Hexahydrophthalsäure, Adipinsäure, Bernsteinsäure und Isophthalsäure.

Geeignete Polyole haben vorzugsweise 2 bis 20 und besonders bevorzugt 2 bis 10 Kohlenstoffatome. Polyole tragen vorzugsweise 2 bis 3, besonders bevorzugt 2 Alkoholgruppen. Beispiele für geeignete Polyole sind Ethylenglycol, Diethylenglykol, Propylenglykol, Dipropylenglykol, Butylenglykol, Neopentylglykol, Glycerol und 1,1,1-Trimethylolpropan.

Die ungesättigten Polyesterharze haben Molekulargewichte Mw von vorzugsweise 500 bis 10.000 g/mol, besonders bevorzugt von 500 bis 8.000 g/mol und am meisten bevorzugt von 1.000 bis 6.000 g/mol.

Vinylesterharze sind Reaktionsprodukte, die durch Polyadditionen oder Veresterungsreaktionen von Phenolderivaten und ethylenisch ungesättigten Mono- oder Dicarbonsäuren oder Dicarbonsäureanhydriden mit 3 bis 20-Kohlenstoffatomen, wie beispielsweise Acrylsäuren oder Methacrylsäuren entstehen. Bevorzugte Phenolderivate sind Bisphenol A und Phenol-Novolak. Die Herstellung der Vinylesterharze ist dem Fachmann bekannt.

Geeignete Initiatoren sind beispielsweise t-Butylperbenzoat, t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan, Di-(4-t-Butylcyclohexyl)peroxydicarbonat, Azobisisobutyronitril.

Geeignete Füllstoffe sind beispielsweise Talkum, Aluminiumhydroxid, Kaolin, Calciumcarbonat, Dolomit, Glaskugeln oder Glasfasern, Quarz, Aluminiumoxid oder Bariumsulfat.

Die radikalisch vernetzbaren Polymerisat-Zusammensetzungen enthalten vorzugsweise 30 bis 70 Gew.-Teile radikalisch vernetzbare Polymerisate, 5 bis 40 Gew.-Teile Polymerisate auf Basis nachwachsender Rohstoffe, 20 bis 160 Gew.-Teile reaktive Monomere, gegebenenfalls 0,5 bis 2 Gew.-Teile Initiator, gegebenenfalls Füllstoffe, wie 25 bis 100 Gew.-Teile Glasfaser oder 50 bis 300 Gew.-Teile Calciumcarbonat, gegebenenfalls weitere Additive wie 0,5 bis 3 Gew.-Teile Formtrennmittel, beispielsweise Zinkstearat, sowie gegebenenfalls weitere Zusatzstoffe, beispielsweise Pigmente, Verdicker, flammhemmende Zusätze.

Des Weiteren können die radikalisch vernetzbaren Polymerisat-Zusammensetzungen weitere Polymerisate enthalten, wie beispielsweise bekanntermaßen als Low-Profile-Additiv wirkende Polymerisate, wie Polyester, Polystyrol, Polyvinylacetat, carboxylfunktionelles Polyvinylacetat oder Polymethylmethacrylat. Der Anteil der weiteren Polymerisate beträgt 0 bis 100 Gew.-%, vorzugsweise 0 bis 50 Gew.-%, besonders bevorzugt 0 bis 10 Gew.-%, jeweils bezogen auf die Gewichtsmenge an Polymerisaten auf Basis nachwachsender Rohstoffe in der jeweiligen radikalisch vernetzbaren Polymerisat-Zusammensetzung.

Ein weiterer Gegenstand der Erfindung sind Verfahren zur Herstellung der radikalisch vernetzbaren Polymerisat-Zusammensetzungen durch Mischen von einem oder mehreren radikalisch vernetzbaren Polymerisaten, einem oder mehreren ethylenisch ungesättigten Monomeren (reaktive Monomere) und gegebenenfalls von Initiatoren, gegebenenfalls von Füllstoffen sowie gegebenenfalls von weiteren Zusätzen, dadurch gekennzeichnet, dass
zusätzlich ein oder mehrere Polymerisate auf Basis nachwachsender Rohstoffe ausgewählt aus der Gruppe umfassend Kohlenhydrate und Naturkautschuks beigemischt werden.

Die Polymerisate auf Basis nachwachsender Rohstoffe und die radikalisch vernetzbaren Polymerisate werden separat oder zusammen, gegebenenfalls in Kombination mit weiteren Polymerisaten, im allgemeinen in reaktiven Monomeren gelöst und gegebenenfalls mit weiteren Additiven wie Füllstoffen, Verdickern, Initiatoren und Verarbeitungshilfsmitteln gemischt. Werden die Polymerisate auf Basis nachwachsender Rohstoffe oder die radikalisch vernetzbaren Polymerisaten in reaktiven Monomeren gelöst, so werden die radikalisch vernetzbaren Polymerisate vorzugsweise als 50 bis 70 %-ige Lösung in reaktiven Monomeren und die Polymerisate auf Basis nachwachsender Rohstoffe vorzugsweise als 30 bis 50 %-ige Lösung in reaktiven Monomeren eingesetzt.

Das Mischen der Komponenten zur Herstellung der radikalisch vernetzbaren Polymerisat-Zusammensetzungen kann unter Einsatz der gängigen, dem Fachmann bekannten Vorrichtungen, wie beispielsweise Reaktoren, Rührkessel oder Mischer, und Rührer, wie beispielsweise Flügel-, Anker- oder Blattrührer, durchgeführt werden.

Ein weiterer Gegenstand der Erfindung sind Composite-Bauteile erhältlich durch Härten der radikalisch vernetzbaren Polymerisat-Zusammensetzungen.

Das Härten der radikalisch vernetzbaren Polymerisat-Zusammensetzungen erfolgt vorzugsweise bei Temperaturen von ≥ 20 °C, besonders bevorzugt von 20 bis 200 °C und am meisten bevorzugt von 20 bis 165 °C. Vorzugsweise erfolgt das Härten in Gegenwart von einem oder mehreren Initiatoren durch radikalisch initiierte Polymerisation. Gegebenenfalls werden die radikalisch vernetzbaren Polymerisat-Zusammensetzungen beim Härten bei der jeweiligen Temperatur unter Anwendung von Drücken von ≥ 1 mbar, besonders bevorzugt von 1 bis 200.000 mbar und am meisten bevorzugt von 1.000 bis 200.000 mbar verpresst.

Die Composite-Bauteile können nach allen gängigen Herstellungsverfahren aus den radikalisch vernetzbaren Polymerisat-Zusammensetzungen erhalten werden, wie beispielsweise mittels der Sheet Molding Compound Technology (SMC), Bulk Molding Compound Technology (BMC), Resin Transfer Molding (RTM) oder Resin Injection Molding (RIM).

Vorzugsweise werden die Composite-Bauteile mittels der BMC-Technik (Bulk Molding Compound) oder der SMC-Technik (Sheet Molding Compound) hergestellt.

Bei dem BMC-Verfahren werden die Lösungen der radikalisch vernetzbaren Polymerisate in reaktivem Monomer und die Polymerisate auf Basis nachwachsender Rohstoffe und gegebenenfalls die weiteren Komponenten wie der Initiator, Füllstoff, Formtrennmittel oder weitere Polymerisate, Low-Profile-Additive oder Zusatzstoffe zu einer pastösen Masse vermischt, danach werden gegebenenfalls Glasfasern zugemischt, und anschließend werden die so erhaltenen radikalisch vernetzbaren Polymerisat-Zusammensetzungen unter Anwendung von Druck und Temperatur zu Composite-Bauteilen ausgehärtet. Beispielsweise werden mit dieser Technik Reflektoren für Autoscheinwerfer hergestellt.

Beim SMC-Verfahren wird analog dem BMC-Verfahren eine radikalisch vernetzbare Polymerisat-Zusammensetzung in Form einer pastösen Masse aus einer Lösung der radikalisch vernetzbaren Polymerisate in reaktivem Monomer und dem Polymerisat auf Basis nachwachsender Rohstoffe und gegebenenfalls den weiteren Komponenten wie Initiator, Füllstoff, Formtrennmittel, weiteren Polymerisaten oder Zusatzstoffen hergestellt und auf zwei Trägerfolien aufgetragen wird. Anschließend werden geschnittene Glasfaserrovings auf eine der beiden Schichten aufgestreut und schließlich beide Trägerfolien miteinander vereint, so dass die erzeugten-Schichten miteinander in Kontakt kommen. Es folgt eine Kompaktierung durch ein System von Walzen. Der resultierende flächige SMC-Compound wird dann aufgerollt und mindestens drei Tage unter definierten Bedingungen gelagert, was als Reifung bezeichnet wird. Schließlich wird der flächige Sandwich von der Folie abgezogen, in Stücke geschnitten und unter Anwendung von Druck und Temperatur zu Formteilen verpresst. So erhältliche Composite-Bauteile werden beispielsweise als Heckklappen von Automobilen eingesetzt.

Die erfindungsgemäßen Polymerisate auf Basis nachwachsender Rohstoffe zeigen überraschenderweise eine vergleichbare Wirkung als Low-Profile-Additive wie herkömmliche Low-Profile-Additive auf Basis rein petrochemischer Produkte. Die Polymerisate auf Basis nachwachsender Rohstoffe sind in gleicher Weise wie herkömmliche LPA in Verfahren zur Herstellung von Composite-Bauteilen einsetzbar; insbesondere sind die Polymerisate auf Basis nachwachsender Rohstoffe sehr gut in reaktiven Monomeren, wie Styrol, löslich. Die Polymerisate auf Basis nachwachsender Rohstoffe führen auch zu Composite-Bauteilen mit den gewünschten anwendungstechnischen Eigenschaften, wie beispielsweise mechanischen Eigenschaften.

Die nachfolgenden Beispiele dienen zur weiteren Erläuterung der Erfindung, ohne diese in irgendeiner Weise einzuschränken.

### Herstellung der Polymerisate auf Basis nachwachsender Rohstoffe:

### Beispiel 1

Es wurden 20 g Kartoffelstärke (Kartoffelstärke superior, Emsland-Group, Deutschland) in einem 11 Glasreaktor mit Ankerrührung bei 60°C in 380 g Wasser gelöst. Anschließend wurden zu dieser klaren Lösung unter Rühren 180 g Vinylacetat sowie 0,3 g Ammoniumcer(IV)-nitrat gegeben. Es wurde eine Lösung von 1,2 g Ammoniumcer(IV)-nitrat in 20 g Wasser über drei Stunden zudosiert. Nach insgesamt fünf Stunden bei 60°C wurde die erhaltene Dispersion durch Vakuumdestillation getrocknet. Vor der Destillation betrug der Feststoffgehalt der Dispersion 33 %, was einem Umsatz von 98,5% entspricht.

### Beispiel 2

Es wurde analog zu Beispiel 1 verfahren, jedoch kamen 60 g Kartoffelstärke und 140 g Vinylacetat zum Einsatz (Umsatz: 99,5%). Die Herstellung der Lösung der Kartoffelstärke in Wasser und die Polymerisation erfolgten bei 65°C an Stelle von 60°C. Die Trocknung der Dispersion erfolgte durch Sprühtrocknung. Das so erhaltene Pulver löste sich 40 Gew.-%ig in Styrol vollständig. Im IR-Spektrum des Polymerisationsprodukts traten die charakteristischen Banden von Poly(vinylacetat), beispielsweise bei 1720 cm⁻¹ und 1225 cm⁻¹, und Stärke, beispielsweise bei 3272 cm⁻¹ und 762 cm⁻¹, auf.

### Beispiel 3

Es wurde analog zu Beispiel 1 verfahren, jedoch kamen 100 g Kartoffelstärke, 400 g Wasser und 100 g Vinylacetat zum Einsatz (Umsatz: 99,2%).

### Beispiel 4

In einem Laborkneter wurden 150 g Kartoffelstärke mit 300 g Vinylacetat und 5 g Crotonsäure bei 65°C vermengt. Zu der erhaltenen teigigen Masse wurde eine Lösung von 1 g Ammoniumcer(IV)-nitrat in 45 g Vinylacetat gegeben. Anschließend wurde für 4 Stunden bei 65°C weitergeknetet. Durch Destillation wurden die flüchtigen Anteile (ca. 1,0 g) entfernt. Das so erhaltene Pulver löste sich 40 Gew.-%ig in Styrol vollständig. Im IR-Spektrum des Polymerisationsprodukts traten die charakteristischen Banden von Poly(vinylacetat) und Stärke auf.

### Beispiel 5

Es wurde analog zu Beispiel 2 verfahren, jedoch kamen als ethylenisch ungesättigte Monomere 120 g Vinylacetat, 18 g Methylmethacrylat und 2 g Methacrylsäure zum Einsatz und die Umsetzung erfolgte bei 50°C (Umsatz: 99%). Das so erhaltene Pulver löste sich 40 Gew.-%ig in Styrol vollständig.

### Beispiel 6

Es wurden 40 g Kartoffelstärkeether (Emcol F1796, Emsland-Group, Deutschland) bei 65°C in 350 g Wasser gelöst. Anschließend wurden zu dieser klaren Lösung über einen Zeitraum von 3 Stunden unter Rühren 140 g Vinylacetat sowie 20 g Methylmethacrylat gegeben. Parallel dazu wurden eine Lösung von 0,3 g Ammoniumcer(IV)-nitrat in 5 g Wasser und eine Lösung von 1,5 g Kaliumperoxodisulfat in 45 g Wasser über einen Zeitraum von 4 Stunden dosiert. Nach insgesamt 6 Stunden wurde die erhaltene Dispersion (Umsatz: 99,9%) durch Vakuumdestillation getrocknet.

### Beispiel 7

In einem Laborkneter wurden 90 g anionische Maisstärke (Emprint CE, Emsland-Group, Deutschland) mit 100 g Methylmethacrylat und 20 g Methylacrylat bei 50°C vermengt. Zu der erhaltenen teigigen Masse wurde über einen Zeitraum von 2 Stunden eine Lösung von 1 g Ammoniumcer(IV)-nitrat in 20 g Methylmethacrylat gegeben. Anschließend wurde für 4 Stunden bei 65°C weitergeknetet. Durch Destillation wurden die flüchtigen Anteile (ca. 1 g) entfernt.

### Beispiel 8

Es wurde analog zu Beispiel 2 verfahren, jedoch kamen an Stelle von 140g Vinylacetat 138 g Styrol zum Einsatz. Die Reaktion erfolgte bei 55°C. Weiterhin wurden über einen Zeitraum von 2 Stunden 2 g Maleinsäureanhydrid aus einer auf 55 °C temperierten Vorlage dosiert. Das so erhaltene Pulver löste sich 40 Gew.-%ig in Styrol vollständig. Im IR-Spektrum des Polymerisationsprodukts traten die charakteristischen Banden von Poly(vinylbenzol) und Stärke auf.

Da sich die Polymerisationsprodukte in Styrol vollständig auflösten, ergibt sich in eindeutiger Weise, dass die Stärken quantitativ mit ethylenisch ungesättigten Monomeren gepfropft wurden und keine freie Stärke mehr vorlag; denn freie Stärke ist in Styrol praktisch unlöslich.

### Herstellung von Composite-Bauteilen nach dem BMC-Verfahren:

Zuerst wurden das UP-Harz und die Additive entsprechend der Angaben in Tabelle 1 bis auf die Glasfasern und Füllstoff (Calciumcarbonat Millicarb OG) mit einem Dissolver in einem Behälter 2 Minuten vorgemischt (Harzpaste). In einem zweiten Schritt wurde diese Harzpaste in einem kleinen Laborkneter mit den Glasfasern und dem Calciumcarbonat 10 Minuten vermischt.

Der BMC-Compound (Bulk molding compound) wurde dann mit geeigneten Folien styroldicht eingepackt und 2 Tage bei 23°C gelagert (Reifezeit) und anschließend in eine Wickert-Presse eingelegt (Pressbedingungen: 3 Minuten, 160 °C, 730 KN Presskraft, 3 mm Plattendicke).

**Tabelle 1: Rezeptur zur Herstellung der Composite-Bauteile:**

| Komponenten | [g] |
|---|---|
| | |
| Palapreg P 18-03 (UP-Harz)^{a)} | 60 |
| LPA [40%ig in Styrol]^{g)} | 40 |
| Trigonox C (Peroxid)^{b)} | 1,5 |
| Luvatol MK 35^{c)} (Eindickpaste) | 3 |
| Calciumstearat (Gleitmittel) | 4 |
| PBQ^{d)} (Inhibitor) | 0,3 |
| Millicarb OG^{e)} (Füllstoff) | 270 |
| Hydrochinon (Stabilisator) | 0,03 |
| Cratec 163D-14C^{f)} (Glasfasern, 4mm Länge)) | 43,2 |

| | |
|---|---|
| a) Handelsname der Firma DSM b) Handelsname der Firma Akzo c) Handelsname der Firma Lehmann & Voss & Co d) p-Hydrochinon in Form einer 10 Gew.-%igen Lösung in Methylmethacrylat. e) Handelsname der Firma Omya GmbH f) Handelsname der Firma Owens Corning g) siehe Angaben in den Tabellen 2 und 3. | |

### Austestung der Composite-Bauteile

Die so erhaltenen BMC-Platten wurden nach Abkühlung auf Raumtemperatur wie folgt ausgetestet:
- zur Charakterisierung der mechanischen Eigenschaften wurden Biege-E-Modul und Biegefestigkeit gemäß DIN EN ISO 14125 bestimmt;
- Schrumpfwerte (linearer Schrumpf): Volumenänderung wurde mittels Abmessen bestimmt und in Prozent-Werten angegeben.
- Zur quantitativen Beurteilung der Oberflächenqualität wurden Glanz, Longwave und Shortwave mit Messgeräten der Firma Byk-Gardner bestimmt.

Die Ergebnisse der Austestung der erfindungsmäßen LPA der Beipiele 1-8 sind in Tabelle 2 aufgeführt. Die Ergebnisse für die nicht erfindungsgemäßen Vergleichsbeipiele sind in Tabelle 3 zusammengefasst.

**Tabelle 2: Ergebnisse der Austestung der erfindungsgemäßen Composite-Bauteile:**

| Beispiel | 9 | 10 | 11 | 12 | 13 | 14 | 15 | 16 |
|---|---|---|---|---|---|---|---|---|
| LPA aus Beispiel | 1 | 2 | 3 | 4 | 5 | 6 | 7 | 8 |
| Linearer Schrumpf [%] | 0,04 | 0,0 | 0,08 | 0,03 | 0,04 | 0,02 | 0,09 | 0,10 |
| Biege-E-Modul [MPa] | 13000 | 12500 | 12000 | 15000 | 14000 | 12500 | 13000 | 12000 |
| Biegefestigkeit [MPa] | 61 | 65 | 55 | 60 | 79 | 64 | 70 | 55 |
| Glanz¹⁾ | 70 | 77 | 75 | 83 | 82 | 80 | 73 | 75 |
| Longwave²⁾ | 1,7 | 1,5 | 2,0 | 1,4 | 1,3 | 1,5 | 2,0 | 2,1 |
| Shortwave²⁾ | 7,6 | 8,0 | 7,3 | 8,8 | 9,2 | 7,6 | 7,1 | 6,2 |

| | | | | | | | | |
|---|---|---|---|---|---|---|---|---|
| ¹⁾ Bestimmt mit dem Messgerät Byk-Gardner micro-haze plus ²⁾ Bestimmt mit dem Messgerät Byk-Gardner micro-wave scan | | | | | | | | |

**Tabelle 3: Ergebnisse der Austestung von nicht-erfindungsgemäßen Composite-Bauteilen:**

| Vergleichsbeispiel | 17 | 18 | 19 |
|---|---|---|---|
| LPA | C 501^{a)} | Kartoffelstärke superior^{b)} | Kartoffelstärke superior^{b)} und C 501^{a)} (im Gew.-Verhältnis 1 : 1) |
| Linearer Schrumpf [%] | 0,02 | 0,40 | 0,20 |
| Biege-E-Modul [MPa] | 13500 | 15000 | 14000 |
| Biegefestigkeit [MPa] | 60 | 81 | 70 |
| Glanz¹⁾ | 82,3 | n. m ³⁾ | n. m ³⁾ |
| Longwave²⁾ | 1,2 | n. m ³⁾ | n.m. ³⁾ |
| Shortwave²⁾ | 9,5 | n. m ³⁾ | n.m. ³⁾ |

| | | | |
|---|---|---|---|
| ^{a)} VINNAPAS^{®} C501, Handelsname der Wacker Chemie AG ^{b)} Kartoffelstärke, Handelsname der Firma Emsland-Stärke GmbH ¹⁾ Bestimmt mit dem Messgerät Byk-Gardner micro-haze plus ²⁾ Bestimmt mit dem Messgerät Byk-Gardner micro-wave scan ³⁾ n.m. = nicht messbar da Oberflächenqualität zu schlecht | | | |

Aus Tabelle 2 geht hervor, dass die erfindungsgemäß eingesetzten Polymerisate auf Basis nachwachsender Rohstoffe überraschenderweise hoch wirksame LPA sind. Der Vergleich der Ergebnisse der Tabelle 2 und mit Vergleichsbeispiel 17 (Tabelle 3) verdeutlicht, dass mit den erfindungsgemäßen Polymerisaten sogar eine ähnliche Schrumpf-reduzierende Wirkung und ähnliche anwendungstechnische Eigenschaften erzielt werden wie mit einem bisher gängigerweise als LPA eingesetzten Polymer.

## Patentansprüche

1. Verwendung von Polymerisaten auf Basis von nachwachsenden Rohstoffen als Low-Profile-Additive (LPA), **dadurch gekennzeichnet, dass** die Polymerisate auf Basis von nachwachsenden Rohstoffen erhältlich sind durch radikalisch initiierte Polymerisation von einem oder mehreren ethylenisch ungesättigten Monomeren in Gegenwart von einem oder mehreren nachwachsenden Rohstoffen ausgewählt aus der Gruppe umfassend Kohlenhydrate und Naturkautschuks.

2. Verwendung von Polymerisaten auf Basis von nachwachsenden Rohstoffen nach Anspruch 1, **dadurch gekennzeichnet, dass** die ethylenisch ungesättigten Monomere ausgewählt werden aus der Gruppe umfassend Vinylester, (Meth)acrylsäureester, Vinylaromaten, Olefine, 1,3-Diene und Vinylhalogenide.

3. Verwendung von Polymerisaten auf Basis von nachwachsenden Rohstoffen nach Anspruch 1 oder 2, **dadurch gekennzeichnet, dass** die Polymerisate auf Basis von nachwachsenden Rohstoffen ein oder mehrere Monomer-Einheiten aus der Gruppe umfassend Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten.

4. Verwendung von Polymerisaten auf Basis von nachwachsenden Rohstoffen nach Anspruch 1 bis 3, **dadurch gekennzeichnet, dass** die Kohlenhydrate ausgewählt werden aus der Gruppe umfassend Zucker, Stärken, Cellulosen und Chitine.

5. Verwendung von Polymerisaten auf Basis von nachwachsenden Rohstoffen nach Anspruch 4, **dadurch gekennzeichnet, dass** die Stärke aus Knollen oder Wurzeln, wie Kartoffeln, Maranta (Arrowroot), Maniok (Tapioka) oder Süßkartoffeln (Batate), Getreidesamen, wie Weizen, Mais, Roggen, Reis, Gerste, Hirse, Hafer, Triticale oder Sorghum, Früchten, wie Bananen, Kastanien, Eicheln, Erbsen, Bohnen oder anderen Leguminosen, oder Mark, wie Sago stammt.

6. Verwendung von Polymerisaten auf Basis von nachwachsenden Rohstoffen nach Anspruch 1 bis 5, **dadurch gekennzeichnet, dass** die Polymerisate auf Basis nachwachsender Rohstoffe 5 bis 90 Gew.-% an Einheiten von nachwachsenden Rohstoffen enthalten, bezogen auf das Gesamtgewicht der Polymerisate auf Basis nachwachsender Rohstoffe.

7. Verwendung von Polymerisaten auf Basis von nachwachsenden Rohstoffen nach Anspruch 1 bis 6, **dadurch gekennzeichnet, dass** die Polymerisate auf Basis nachwachsender Rohstoffe 10 bis 95 Gew.-% an Einheiten von ethylenisch ungesättigten Monomeren enthalten, bezogen auf das Gesamtgewicht der Polymerisate auf Basis nachwachsender Rohstoffe.

8. Verwendung von Polymerisaten auf Basis von nachwachsenden Rohstoffen nach Anspruch 1 bis 7, **dadurch gekennzeichnet, dass** es
sich bei den Polymerisaten auf Basis von nachwachsenden Rohstoffen um Pfropfcopolymere von ethylenisch ungesättigten Monomeren auf nachwachsende Rohstoffe handelt.

9. Radikalisch vernetzbare Polymerisat-Zusammensetzungen enthaltend ein oder mehrere radikalisch vernetzbare Polymerisate ausgewählt aus ungesättigten Polyesterharzen und Vinylesterharzen, ein oder mehrere ethylenisch ungesättigte Monomere (reaktive Monomere), gegebenenfalls Initiatoren, gegebenenfalls Füllstoffe sowie gegebenenfalls weitere Zusätze, **dadurch gekennzeichnet, dass** zusätzlich ein oder mehrere Polymerisate auf Basis nachwachsender Rohstoffe ausgewählt aus der Gruppe umfassend Kohlenhydrate und Naturkautschuks enthalten sind.

10. Verfahren zur Herstellung der radikalisch vernetzbaren Polymerisat-Zusammensetzungen gemäß Anspruch 9 durch Mischen von einem oder mehreren radikalisch vernetzbaren Polymerisaten ausgewählt aus ungesättigten Polyesterharzen und Vinylesterharzen, einem oder mehreren ethylenisch ungesättigten Monomeren (reaktive Monomere) und gegebenenfalls von Initiatoren, gegebenenfalls von Füllstoffen sowie gegebenenfalls von weiteren Zusätzen, **dadurch gekennzeichnet, dass**
zusätzlich ein oder mehrere Polymerisate auf Basis nachwachsender Rohstoffe ausgewählt aus der Gruppe umfassend Kohlenhydrate und Naturkautschuks beigemischt werden.

11. Composite-Bauteile erhältlich durch Härten der radikalisch vernetzbaren Polymerisat-Zusammensetzungen aus Anspruch 9.

## Claims

1. Use of polymers based on renewable raw materials as low-profile additives (LPAs), **characterized in that** the polymers based on renewable raw materials are obtainable by radically initiated polymerization of one or more ethylenically unsaturated monomers in the presence of one or more renewable raw materials selected from the group encompassing carbohydrates and natural rubbers.

2. Use of polymers based on renewable raw materials according to Claim 1, **characterized in that** the ethylenically unsaturated monomers are selected from the group encompassing vinyl esters, (meth)acrylic esters, vinylaromatics, olefins, 1,3-dienes, and vinyl halides.

3. Use of polymers based on renewable raw materials according to Claim 1 or 2, **characterized in that** the polymers based on renewable raw materials comprise one or more monomer units from the group encompassing vinyl acetate, vinyl esters of α-branched monocarboxylic acids having 9 to 11 C atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, and styrene.

4. Use of polymers based on renewable raw materials according to Claim 1 to 3, **characterized in that** the carbohydrates are selected from the group encompassing sugars, starches, celluloses, and chitins.

5. Use of polymers based on renewable raw materials according to Claim 4, **characterized in that** the starch comes from tubers or roots, such as potatoes, maranta (arrowroot), cassava (tapioca) or sweet potatoes (batata), cereal seeds, such as wheat, corn, rye, rice, barley, millet, oats, triticale or sorghum, fruits, such as bananas, chestnuts, acorns, peas, beans or other legumes, or pith, such as sago.

6. Use of polymers based on renewable raw materials according to Claim 1 to 5, **characterized in that** the polymers based on renewable raw materials contain 5% to 90% by weight of units from renewable raw materials, based on the total weight of the polymers based on renewable raw materials.

7. Use of polymers based on renewable raw materials according to Claim 1 to 6, **characterized in that** the polymers based on renewable raw materials contain 10% to 95% by weight of units from ethylenically unsaturated monomers, based on the total weight of the polymers based on renewable raw materials.

8. Use of polymers based on renewable raw materials according to Claim 1 to 7, **characterized in that** the polymers based on renewable raw materials are graft copolymers of ethylenically unsaturated monomers onto renewable raw materials.

9. Radically crosslinkable polymer compositions comprising one or more radically crosslinkable polymers selected from unsaturated polyester resins and vinyl ester resins, one or more ethylenically unsaturated monomers (reactive monomers), optionally initiators, optionally fillers, and optionally further additions, **characterized in that** additionally one or more polymers based on renewable raw materials selected from the group encompassing carbohydrates and natural rubbers are present.

10. Process for producing the radically crosslinkable polymer compositions according to Claim 9 by mixing one or more radically crosslinkable polymers selected from unsaturated polyester resins and vinyl ester resins, one or more ethylenically unsaturated monomers (reactive monomers), and optionally initiators, optionally fillers, and optionally further additions, **characterized in that**
additionally one or more polymers based on renewable raw materials selected from the group encompassing carbohydrates and natural rubbers are admixed.

11. Composite components obtainable by curing the radically crosslinkable polymer compositions from Claim 9.

## Revendications

1. Utilisation de polymérisats à base de matières premières renouvelables, en tant qu'additifs Low-Profile (LPA) [anti-retrait], **caractérisée en ce que** les polymérisats à base de matières premières renouvelables peuvent être obtenus par polymérisation à amorçage radicalaire d'un ou de plusieurs monomères à insaturation éthylénique en présence d'une ou de plusieurs matières premières renouvelables choisies dans le groupe comprenant des glucides et des caoutchoucs naturels.

2. Utilisation de polymérisats à base de matières premières renouvelables selon la revendication 1, **caractérisée en ce que** les monomères à insaturation éthylénique sont choisis dans le groupe comprenant des esters vinyliques, des esters d'acide (méth)acrylique, des composés vinylaromatiques, des oléfines, des 1,3-diènes et des halogénures de vinyle.

3. Utilisation de polymérisats à base de matières premières renouvelables selon la revendication 1 ou 2, **caractérisée en ce que** les polymérisats à base de matières premières renouvelables contiennent un ou plusieurs motifs monomères choisis dans le groupe comprenant l'acétate de vinyle, des esters vinyliques d'acides monocarboxyliques α-ramifiés ayant de 9 à 11 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène.

4. Utilisation de polymérisats à base de matières premières renouvelables selon les revendications 1 à 3, **caractérisée en ce que** les glucides sont choisis dans le groupe comprenant des sucres, des amidons, des celluloses et des chitines.

5. Utilisation de polymérisats à base de matières premières renouvelables selon la revendication 4, **caractérisée en ce que** l'amidon provient de tubercules ou de racines, tels que les pommes de terre, l'arrowroot *(Maranta),* le manioc (tapioca) ou les patates douces (patates), de graines de céréales, telles que le blé, le maïs, le seigle, le riz, l'orge, le millet, l'avoine, le triticale ou le sorgho, de fruits, tels que les bananes, les marrons, les glands, les pois, les haricots ou d'autres légumineuses, ou de moelle, telle que le sagou.

6. Utilisation de polymérisats à base de matières premières renouvelables selon les revendications 1 à 5, **caractérisée en ce que** les polymérisats à base de matières premières renouvelables contiennent de 5 à 90 % en poids de motifs de matières premières renouvelables, par rapport au poids total des polymérisats à base de matières premières renouvelables.

7. Utilisation de polymérisats à base de matières premières renouvelables selon les revendications 1 à 6, **caractérisée en ce que** les polymérisats à base de matières premières renouvelables contiennent de 10 à 95 % en poids de motifs de monomères à insaturation éthylénique, par rapport au poids total des polymérisats à base de matières premières renouvelables.

8. Utilisation de polymérisats à base de matières premières renouvelables selon les revendications 1 à 7, **caractérisée en ce que** les polymérisats à base de matières premières renouvelables consistent en des copolymères greffés de monomères à insaturation éthylénique sur des matières premières renouvelables.

9. Compositions de polymérisats réticulables par voie radicalaire, contenant un ou plusieurs polymérisats réticulables par voie radicalaire, choisis parmi des résines polyester insaturées et des résines d'esters vinyliques, un ou plusieurs monomères à insaturation éthylénique (monomères réactifs), éventuellement des amorceurs, éventuellement des charges ainsi qu'éventuellement d'autres additifs, **caractérisées en ce qu'**en outre sont contenus un ou plusieurs polymérisats à base de matières premières renouvelables choisies dans le groupe comprenant des glucides et des caoutchoucs naturels.

10. Procédé pour la préparation des compositions de polymérisats réticulables par voie radicalaire selon la revendication 9, par mélange d'un ou de plusieurs polymérisats réticulables par voie radicalaire, choisis parmi des résines polyester insaturées et des résines d'esters vinyliques, d'un ou de plusieurs monomères à insaturation éthylénique (monomères réactifs), et éventuellement d'amorceurs, éventuellement de charges ainsi qu'éventuellement d'autres additifs, **caractérisé en ce**
**qu'**en outre on incorpore un ou plusieurs polymérisats à base de matières premières renouvelables choisies dans le groupe comprenant des glucides et des caoutchoucs naturels.

11. Éléments de construction composites, pouvant être obtenus par durcissement des compositions de polymérisats réticulables par voie radicalaire de la revendication 9.
